## Europäisches Patentamt

## European Patent Office

## Office européen des brevets

(11) Veröffentlichungsnummer: **0 115 775**
**A2**

(12) # EUROPÄISCHE PATENTANMELDUNG

(21) Anmeldenummer: **84100113.4**

(51) Int. Cl.³: **G 01 B 5/00**

(22) Anmeldetag: **07.01.84**

(30) Priorität: **07.02.83 DE 3304070**

(43) Veröffentlichungstag der Anmeldung: **15.08.84**
Patentblatt 84/33

(84) Benannte Vertragsstaaten: **DE FR GB**

(71) Anmelder: **Rheinmetall GmbH,**
**Ulmenstrasse 125 Postfach 6609, D-4000 Düsseldorf**
**(DE)**

(72) Erfinder: **Hellwig, Rolf, Dycker Strasse 30, D-4040 Neuss**
**(DE)**
Erfinder: **Seidensticker, Jens, Dr. Dipl.-Phys.,**
**Jupiterstrasse 30, D-4044 Kaarst (DE)**
Erfinder: **Karius, Klaus Dietmar, Ing. (Grad.),**
**Höningstrasse 30, D-4053 Jüchen 5 (DE)**

(74) Vertreter: **Behrens, Ralf Holger, Dipl.-Phys., in Firma**
**Rheinmetall GmbH Ulmenstrasse 125 Postfach 6609,**
**D-4000 Düsseldorf 1 (DE)**

(54) **Sensorträger.**

(57) Die Erfindung betrifft einen Sensorträger für durch ein Lastengeschoß an unzugänglicher Stelle abzusetzende Sensoren. Um Beschädigungen des empfindlichen Sensors 12 beim
Abschuß- und Absetzvorgang zu vermeiden, ist der Sensor 12
zusammen mit der Sensorhalterung 13 in einem starkwandigen Gehäuse 10 auf engstem Raum zusammengefaltet. Erst
nach Beendigung des Absetzvorgangs richtet sich der Sensor
12 automatisch in seine Arbeitsstellung auf, in der er durch die
Sensorhalterung 13 unterstützt wird. Diese ist flexibel ausgestaltet und besteht aus einer Vielzahl von rotationssymmetrisch ausgebildeten Stützkörpern 13″, die einer Perlenkette
vergleichbar auf einer zentrisch angeordneten, von einer Hülle
umgebenen Stahlseele 17 aufgereiht sind. Eine Druckfeder 14
spannt die Stahlseele 17 und preßt dabei die Stützkörper 13″
der Sensorhalterung 13 aneinander. Die Halterung 13 ermöglicht eine verbesserte Arbeitsweise des Sensors 12 aus einer
höheren Position über Grund.

Akte R 841

Sensorträger

Die Erfindung betrifft einen Sensorträger nach dem Oberbegriff des Patentanspruchs 1.

Häufig besteht das Bedürfnis, insbesondere im militärischen
Bereich, aber nicht ausschließlich dort, Sensoren in unzugänglichen Gebieten abzusetzen, um physikalische Größen,
wie beispielsweise Schall, Temperatur, Feuchtigkeit oder
Gaskonzentration zu erfassen und die gemessenen Werte über
eine drahtlose Nachrichtenübertragungsstrecke, z. B. per
Funk, zur Auswertung an eine Zentrale zu übermitteln.

Eine Möglichkeit zur Ausbringung solcher Sensoren besteht
in der Verwendung von Nutzlastgeschossen, die aus einer
Rohrwaffe verschossen oder von einem Raketenmotor angetrieben eine Anzahl von Sensoren über das Zielgebiet verteilen
und dort beispielsweise per Fallschirm absetzen.

Die Sensoren und die mit ihnen ggf. verbundenen elektronischen Komponenten, die die von den Sensoren aufgenommenen
Parameter verarbeiten und als Funksignal verbreiten, müssen

- 2 -

zum Überstehen der starken Schockbeanspruchungen beim Abschuß und beim Aufprall durch kompakte Gehäuse sorgfältig geschützt werden. Um eine große Anzahl von Sensoren in einem einzigen Lastengeschoß transportieren zu können, müssen diese Verpackungseinheiten zudem räumlich gedrängt aufgebaut werden. Andererseits besteht die Forderung, daß die Sensoren zwecks Vergrößerung ihrer Erfassungsreichweite nach dem Absetzen möglichst hoch über dem Erdboden angeordnet sind,um in ihrer Funktion von Hindernissen, wie z. B. Steinen, Sträuchern oder insbesonderes auch Gras nicht beeinträchtigt zu werden.

Der Erfindung liegt die Aufgabe zugrunde, einen Sensorträger anzugeben, der einerseits den Sensor während des Abschuß- und Absetzvorgangs sicher schützt und der andererseits nach dem Absetzen eine von Hindernissen ungestörte Arbeitsweise des Sensors ermöglicht.

Diese Aufgabe wird durch die im Anspruch 1 angegebene Erfindung gelöst.

Vorteilhafte Ausgestaltungen der Erfindung gehen aus den weiteren Unteransprüchen hervor.

Die Erfindung wird nachfolgend unter Bezug auf die Zeichnung näher erläutert. Dabei zeigt:

Fig. 1: teilweise im Schnitt eine Seitenansicht des Sensorträgers mit einem ausgefahrenen Sensor und einem schematisch angedeuteten Sensor in Verpackungsstellung;

Fig. 2: eine vergrößerte Darstellung eines Teilbereichs
        der Sensorhalterung;

Fig. 3: eine vergrößerte Detaildarstellung aus Fig. 1.

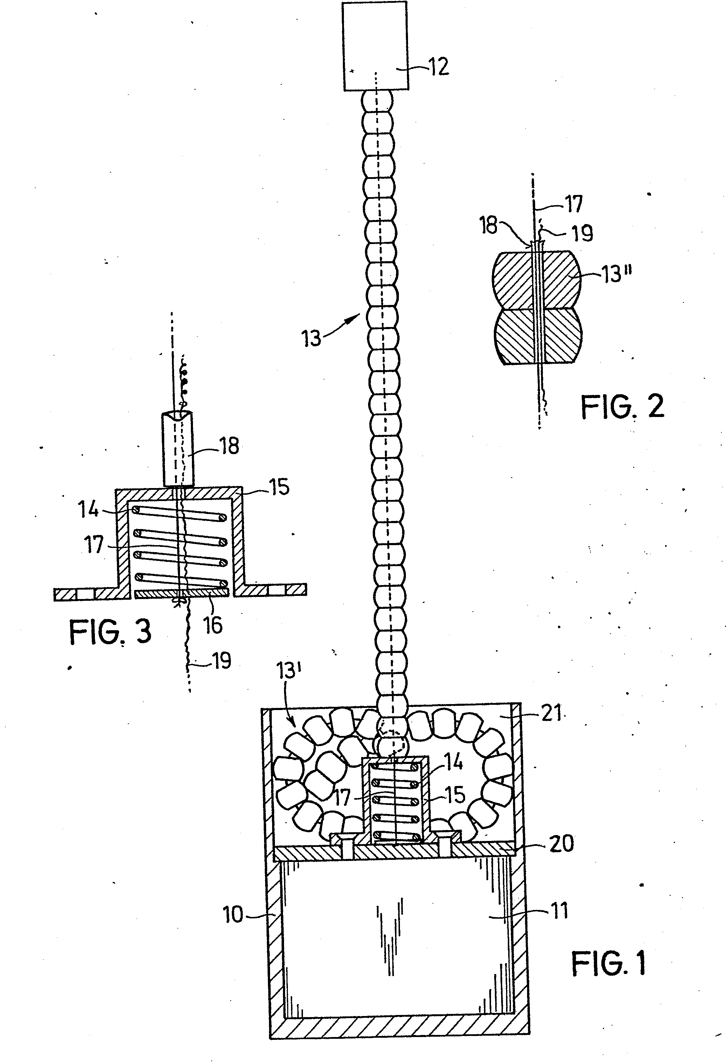

Fig. 1 zeigt in schematischer Darstellung, teilweise im
Schnitt, eine Seitenansicht eines Sensorträgers mit einem in
Arbeitsstellung ausgefahrenen Sensor und zusätzlich schematisch angedeutet einen Sensor mit Halterung in Verpackungs-
oder Ruhestellung. Der Sensorträger umfaßt ein Gehäuse 10,
in dessen unteren Teil die zum Betrieb des Sensors erforderlichen elektronischen Bauelemente und ggf. auch die Energieversorgung untergebracht sind. Eine Zwischenwand 20 schottet den Elektronikteil 11 von einem Verpackungsraum 21 ab,
in dem der Sensor 12 und die Sensorhalterung 13 während
ihrer Ruhelage, d. h. auf dem Transportweg, also insbesondere beim Abschuß und beim Absetzen untergebracht sind.
Die Bezugsziffer 13' bezeichnet die auf engstem Raum zusammengefaltete Sensorhalterung   . Während des Transports
ist der Verpackungsraum 21 durch einen in Fig. 1 nicht mehr
dargestellten Deckel verschlossen, um den Sensor 12 und die
Sensorhalterung 13' zu schützen. Nach Beendigung des Absetzvorgangs kann dieser Deckel durch an sich bekannte
Mittel, beispielsweise eine pyrotechnische Ladung oder
durch mechanische Federmittel, abgesprengt werden, um die
Entfaltung der Sensorhalterung 13 zwecks Verbringung des
Sensors 12 in seine Arbeitsstellung zu ermöglichen. Die
Sensorhalterung 13 soll es dem Sensor 12 ermöglichen, über
am Absetzort ggf. vorhandene Hindernisse, wie beispielsweise
Steine, Sträucher oder Gras, hinwegzusehen, um ungestört
arbeiten zu können. Ein höherer Anbringungsort des Sensors
12 hat zudem noch den Vorteil, daß der Sensor ein größeres
Gebiet überwachen kann.

0115775

Die Sensorhalterung 13 besteht aus einer Vielzahl rotationssymmetrisch ausgebildeter Stützkörper 13" (Fig. 2), die in Arbeitsstellung des Sensors 12 (Fig. 1) mit ihren ebenen Berandungsflächen auf dem jeweils benachbarten Stützkörper 13" aufliegen. Alle Stützkörper 13" sind zentrisch durchbohrt und vermittels dieser Bohrungen, einer Perlenkette vergleichbar, auf einem flexiblen Träger aufgereiht, der aus einer Stahlseele 17 und einer darum angeordneten Hülle 18 besteht. Die Hülle 18 ist lose zwischen dem eigentlichen Sensorkörper 12 und einem hutförmigen Gehäuse 15 angeordnet (Fig. 3), das sich im Inneren des Verpackungsraums 21 befindet und dort mit der Zwischenwand 20 verschraubt ist. Die Stahlseele 17 ihrerseits ist einseitig ebenfalls fest mit dem Sensorkörper 12 verbunden, auf Seiten des Gehäuses 10 jedoch nachgiebig befestigt, und zwar innerhalb des hutförmig ausgebildeten Gehäuses 15. Die Stahlseele 17 ist mit einer Ringscheibe 16 verbunden, die von einer zwischen der Ringscheibe 16 und der inneren Bodenfläche des hutförmigen Gehäuses 15 angeordneten Druckfeder 14 beaufschlagt ist. Im aufgerichteten Zustand des Sensors 12 spannt die Druckfeder 14 die Stahlseele 17 derart, daß die auf der Hülle 18 aufgereihten Stützkörper 13" zwischen dem Sensorgehäuse 12 und der äußeren Grundfläche des hutförmigen Gehäuses 15 zusammengepreßt werden und dadurch eine, wenn auch flexible, ausreichend stabile Halterung für den Sensor 12 darstellen.

Bei ausreichend großer Kraftanwendung läßt sich unter Überwindung der Spannkraft der Druckfeder 14 die Sensorhalterung 13 zusammenfalten und - wie in Fig. 1 schematisch dargestellt - auf engstem Raum in dem Verpackungsraum 21 unterbringen.

0115775

Dies erleichtert - wie eingangs erwähnt - den sicheren
Transport des Sensors 12 zum Einsatzort. Während des Transports sichert der nicht dargestellte Deckel den Verpackungsraum 21 und hindert die Sensorhalterung 13 an der Entfaltung.

Durch die zentralaxial angeordneten Bohrungen der Stützkörper 13" ist zusätzlich noch ein flexibles Kabel 19
hindurchgeführt, das den Sensor 12 mit dem im unteren Teil
des Gehäuses 10 angeordneten Elektronikteil 11 verbindet.
Dieses Kabel 19 übermittelt die vom Sensor 12 erfaßten
Meßgrößen zur weiteren Verarbeitung an das Elektronikteil.

Die vom Sensor 12 erfaßten und vom Elektronikteil 11 in
bestimmtem Umfang verarbeiteten Meßgrößen werden von jedem
abgesetzten Sensor 12 vorzugsweise über Funk an eine entfernte Zentrale zur Auswertung übermittelt. Bekanntlich
hängt die Reichweite einer derartigen Funkverbindung bei
vorgegebener geringer Ausgangsleistung des im Sensorträger
vorhandenen Funksenders auch von der optimalen Antennenanordnung, d. h. einer günstigen Höhe über Grund ab. Um die
Abstrahlungsleistung zu verbessern, wird daher in vorteilhafter Weiterbildung der Erfindung entweder die Seele 17
und/oder die ggf. aus einer Metallwendel bestehende Hülle
18 der Sensorhalterung 13 als Antenne für den Funksender
des Sensorträgers benutzt.

0115775

RHEINMETALL GMBH                Düsseldorf, den 31.1.1983
                               Bs/Sch


Akte R 841


                    P a t e n t a n s p r ü c h e


1. Sensorträger für einen von einem Lastengeschoß abzusetzenden Sensor, g e k e n n z e i c h n e t   d u r c h
   ein ggf. in Kammern eingeteiltes Gehäuse (10) und einen
   nach Öffnen einer Kammer selbsttätig ausfahrbaren Sensor
   (12).

2. Sensorträger nach Anspruch 1,   d a d u r c h   g e -
   k e n n z e i c h n e t,   daß der Sensor (12) von einer
   flexiblen Sensorhalterung (13) gestützt ist, die
   während des Transports, also insbesondere während des
   Abschuß- und Absetzvorgangs, auf kleinstem Raum zusammenfaltbar ist, in Arbeitsstellung dem Sensor (12) eine
   über das Gehäuse (10) hinausragende Lage ermöglicht.


                            - 2 -

3. Sensorträger nach einem der Ansprüche 1 und 2, d a -
d u r c h   g e k e n n z e i c h n e t,   daß die Sensorhalterung (13, 13') aus einer Vielzahl von rotationssymmetrisch ausgebildeten Stützkörpern (13") besteht,
die zentrisch durchbohrt und, Ketten einer Perle vergleichbar, auf einer von einer Hülle (18) umgebenen Stahlseele
(17) aufgereiht sind und die sich im aufgerichteten Zustand des Sensors (12) mit ebenen Berandungsflächen aufeinander abstützen.

4. Sensorträger nach einem der Ansprüche 1 bis 3, d a -
d u r c h   g e k e n n z e i c h n e t,   daß die Hülle
(18) zwischen dem Sensorgehäuse (12) und der äußeren
Grundfläche eines topfförmig ausgebildeten Gehäuses (15)
angeordnet ist, das innerhalb des zum Transport des
Sensors (12) und der Sensorhalterung (13) dienenden Verpackungsraums (21) angeordnet ist.

5. Sensorträger nach einem der Ansprüche 1 bis 4, d a -
d u r c h   g e k e n n z e i c h n e t,   daß das Gehäuse (15) konzentrisch eine Druckfeder (14) umgibt,
die sich an der inneren Bodenfläche des topfförmigen
Gehäuses (15) abstützend eine Ringscheibe (16) beaufschlagt, an der das dem Sensor (12) abgewandte Endstück
der Stahlseele (17) befestigt ist.

6. Sensorträger nach einem der Ansprüch 1 bis 5, d a -
d u r c h   g e k e n n z e i c h n e t,   daß im unteren Teil des Gehäuses (10) ein zur Verarbeitung und
Weiterleitung der Signale des Sensors (12) bestimmter
Elektronikteil (11) angeordnet ist.

7. Sensorträger nach einem der Ansprüche 1 bis 6, d a -
   d u r c h g e k e n n z e i c h n e t, daß Sensor
   (12) und Elektronikteil (11) vermittels eines flexiblen
   Kabels (19) miteinander verbunden sind, welches ebenfalls wie die Hülle (18) und die Stahlseele (17) durch
   die Bohrungen der Stützkörper (13") hindurchgeleitet
   ist.

8. Sensorträger nach einem der Ansprüche 1 bis 7, d a -
   d u r c h g e k e n n z e i c h n e t, daß der
   Elektronikteil (11) einen Funksender zur Übertragung
   der vom Sensor (12) erfaßten und vom Elektronikteil
   (11) aufbereiteten Daten an eine entfernte Zentrale
   umfaßt und daß die Stahlseele (17) und/oder die Hülle
   (18) in Doppelfunktion als Antenne mit dem Funksender
   verbunden sind.

−1/1−

0115775

FIG. 2

FIG. 3

FIG. 1